## Europäisches Patentamt

## European Patent Office

## Office européen des brevets

(19)

(11) Publication number: **0 066 848**
A2

(12) # EUROPEAN PATENT APPLICATION

(21) Application number: **82104872.5**

(22) Date of filing: **03.06.82**

(51) Int. Cl.³: **H 04 N 5/76**

(30) Priority: **05.06.81 JP 87066/81**

(43) Date of publication of application: **15.12.82**
Bulletin 82/50

(84) Designated Contracting States: **DE FR GB**

(71) Applicant: **SANYO ELECTRIC CO., LTD., 18,
Keihanhondori 2-chome, Moriguchi-shi Osaka-fu (JP)**

(72) Inventor: **Urushidani, Masayoshi, 25-20-103,
Shakusonji-cho, Hirakata-shi Osaka-fu (JP)**
Inventor: **Suzuki, Shiro, Sanyo Denki Tokuan-ryo 1178-8,
Inada, Higashiosaka-shi Osaka-fu (JP)**

(74) Representative: **Glawe, Delfs, Moll & Partner
Patentanwälte, Postfach 26 01 62 Liebherrstrasse 20,
D-8000 München 26 (DE)**

(54) Television signal recording apparatus.

(57) A television signal recording apparatus comprises a tuner (2) for receiving a broadcast television signal. A horizontal synchronizing signal included in the television signal obtained from the tuner (2) is extracted by a synchronizing separating circuit (65) and is applied to a phase-locked loop circuit (21) and a synchronous detecting circuit (22). The phase-locked loop circuit (21) generates a signal in synchronism with the horizontal synchronizing signal and of a frequency approximately equal to that of the horizontal synchronizing signal and provides the same to the synchronous detecting circuit (22). The synchronous detecting circuit (22) compares the phase of the horizontal synchronizing signal and the phase of the signal obtained from the phase-locked loop circuit (21), thereby to provide a representing signal representing that the signal received by the tuner (2) is not an ordinary television signal on the occasion of non-coincidence of the phases of the horizontal synchronizing signal and the signal obtained from the phase-locked loop circuit (21). An audio signal is interrupted by an interrupting circuit (20) and a video signal is also interrupted by interrupting circuits (8) and (17) in response to the representing signal.

TITLE OF THE INVENTION

Television Signal Recording Apparatus

BACKGROUND OF THE INVENTION

Field of the Invention

The present invention generally relates to a television signal recording apparatus. More specifically, the present invention relates to an improvement in a television signal recording apparatus such as a video tape recorder for recording in a magnetic tape a television signal obtained from a tuner adapted for receiving a broadcast television signal.

Description of the Prior Art

The electrical communication regulation (FTZ) in West Germany, for example, stipulates a requirement to the effect that in receiving a broadcast television signal by television receivers reception of an electric wave other than that of ordinary television broadcasting, say reception of an electric wave for police wireless communication, should be avoided. More specifically, according to the FTZ, the frequency range in which reception by television receivers is allowed ranges from 47 to 68 MHz (channels 2 to 4) in the VHF low band, from 174 to 230 MHz (channels 5 to 12) in the VHF high band, and from 470 to 790 MHz (channels 21 to 60) in the UHF band. However, reception has been allowed in the UHF band up to the upper limit of 860 MHz. Any deviation higher than or lower than the upper or lower limit as described above is allowed only for the maximum of 300 kHz in the case where a signal of the level 70 dB ($\mu$V) is applied at the impedance of 75 $\Omega$ to an antenna input terminal of a tuner included in a television receiver.

The above described FTZ also applies to video tape recorders including a built-in tuner which is similar to that for television receivers, in which case reception of an electric wave other than that of ordinary television broadcasting need be avoided. One approach to effectively cope with such regulation as the FTZ would be to avoid reception of an electric wave other than that of ordinary television broadcasting by restricting a frequency region of an electric wave that can be received by a tuner. However, generally it is an extremely difficult task. The reason is that tuners are generally manufactured on a mass production basis and as a result some diversification of the receiving frequencies is caused for each of the tuners, with the result that there is a fear that some tuners could receive an electric wave of a frequency higher or lower than the upper or lower limit of the restricted frequency region. Nevertheless, it is extremely difficult to make any and all of the tuners incapable of receiving any electric wave other than that of ordinary television broadcasting by eliminating such diversification of the tuner characteristics in manufacture thereof on a mass production basis. More specifically, any attempt to meet the regulation such as the FTZ requires components of high precision for assembling the tuners and also requires a strict testing process, which inevitably increases the cost of the tuners.

Since strict restriction of the receivable frequencies by tuners is difficult, the restriction has been loosened under a predetermined condition, i.e. provided that such tuners are adapted such that when an electric wave other than that of the ordinary television broadcasting is received an audio signal based on such electric wave is interrupted so that the same may not be reproduced. Since it is extremely difficult to strictly restrict the receiving frequencies by the tuners, as described previously, observance of such conditional requirement that an audio signal is interrupted when an electric wave other than that of the ordinary television broadcasting is received would be more practical. Nevertheless, any conventional video tape recorders fail to comprise any means for determining whether the received signal is of that of the ordinary television broadcasting or not.

SUMMARY OF THE INVENTION

Briefly described, according to the present invention, a tuner means receives a broadcast television signal to provide a television signal, whereupon a synchronizing signal is extracted from the television signal and is applied to a signal generating means, which provides a signal in synchronism with the synchronizing signal and of a frequency approximately equal to that of the synchronizing signal, and a phase determining means is provided for determining coincidence or non-coincidence of the phases of the signal obtained from the signal generating means and of the synchronizing signal. Since the synchronizing signal is not obtained at all or the phase of the synchronizing signal becomes in disorder when the tuner means receives an electric wave other than that of the ordinary television broadcasting, the phases of the synchronizing signal and of the signal obtained from the signal generating means become non-coincident, whereby it can be determined that the received signal is not a signal of the ordinary television broadcasting.

Thus, according to the present invention, by simply comparing the phases of the synchronizing signal and of a signal prepared to be in synchronism with the synchronizing signal and of a frequency approximately to that of the synchronizing signal, determination can be made with relative simplicity and with certainty of whether a signal received by a tuner is a signal of the ordinary television broadcasting. Thus, it is possible to prevent the signal other than the ordinary television signal from being recorded in a recording medium in response to such determination.

In a preferred embodiment of the present invention, a horizontal synchronizing signal is extracted from the television signal and the horizontal synchronizing signal thus extracted is applied to a phase-locked loop circuit so that a signal in synchronism with the horizontal synchronizing signal and of a frequency approximately equal to the horizontal synchronizing signal is generated. Then the signal thus obtained and the horizontal synchronizing signal are both applied to a synchronous detecting circuit so that both may be synchronously detected. Accordingly, if and when a signal received by the tuner is not of a signal of the ordinary television broadcasting, a representing signal representing to the effect is obtained from the synchronous detecting circuit. Then an audio signal being applied to a monitor television receiver or a recording means is interrupted in response to the representing signal. Alternatively, a video signal being applied to a monitor television receiver or a recording means may be interrupted in response to the representing signal. Alternatively, a response rate of an automatic gain control means for changing the level of the video signal may be controlled by changing a time constant in response to the above described representing signal. Thus, according to the preferred embodiment of the present invention now in description, at least an audio signal is interrupted when a signal obtained from a tuner is not of a signal of the

- 5 -

ordinary television broadcasting and therefore the requirement provided in the regulation such as the FTZ can be fully met.

Accordingly, a principal object of the present invention is to provide a novel television signal recording apparatus which comprises a circuit for determining with simplicity and with certainty whether a signal received by a tuner is a signal of the ordinary television broadcasting, in which it is possible to prevent the signal other than the ordinary television signal from being recorded in a recording medium in response to such determination.

One aspect of the present invention resides in a television signal recording apparatus wherein an audio signal output is interrupted in the case where a signal obtained from a tuner is that other than a signal of the ordinary television broadcasting.

Another aspect of the present invention resides in a television signal recording apparatus wherein a video signal output is interrupted in the case where a signal obtained from a tuner is that other than a signal of the ordinary television broadcasting.

These objects and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a block diagram of one embodiment of the present invention;

Fig. 2 is a schematic diagram of a synchronous detecting circuit shown in Fig. 1;

Fig. 3 is a graph showing the waveforms of electrical signals for depicting an operation of one embodiment of the present invention; and

Fig. 4 is a schematic diagram of a peak detecting circuit shown in Fig. 1.

DESCRIPTION OF THE PREFERRED EMBODIMENTS

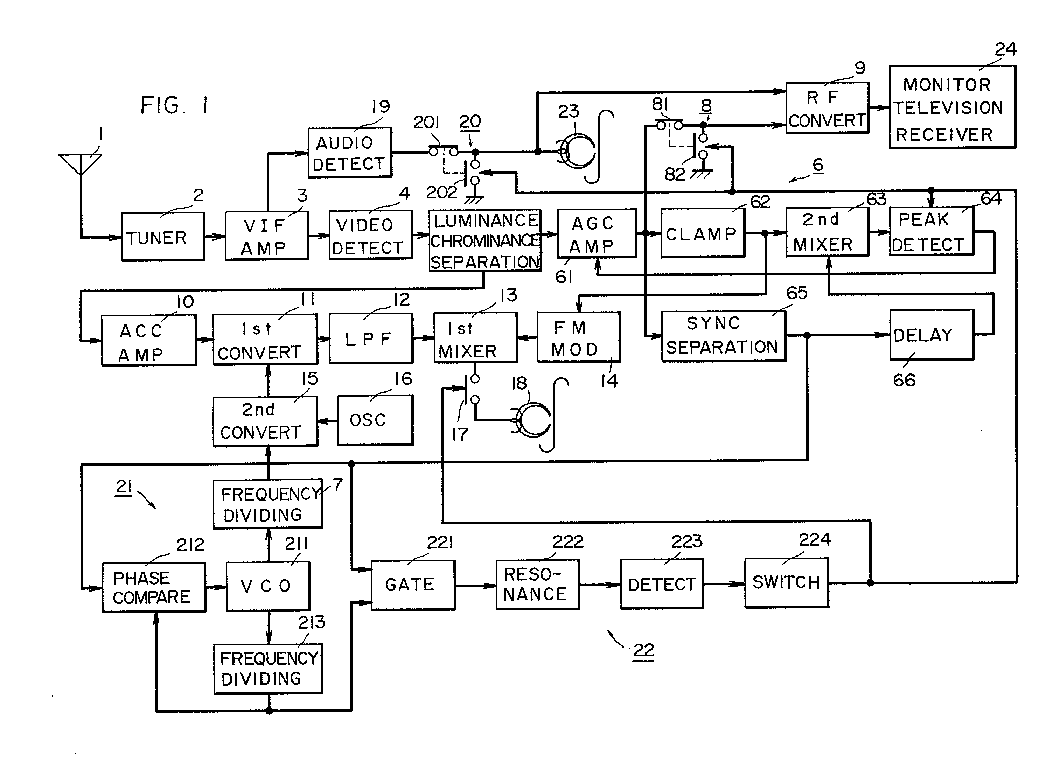

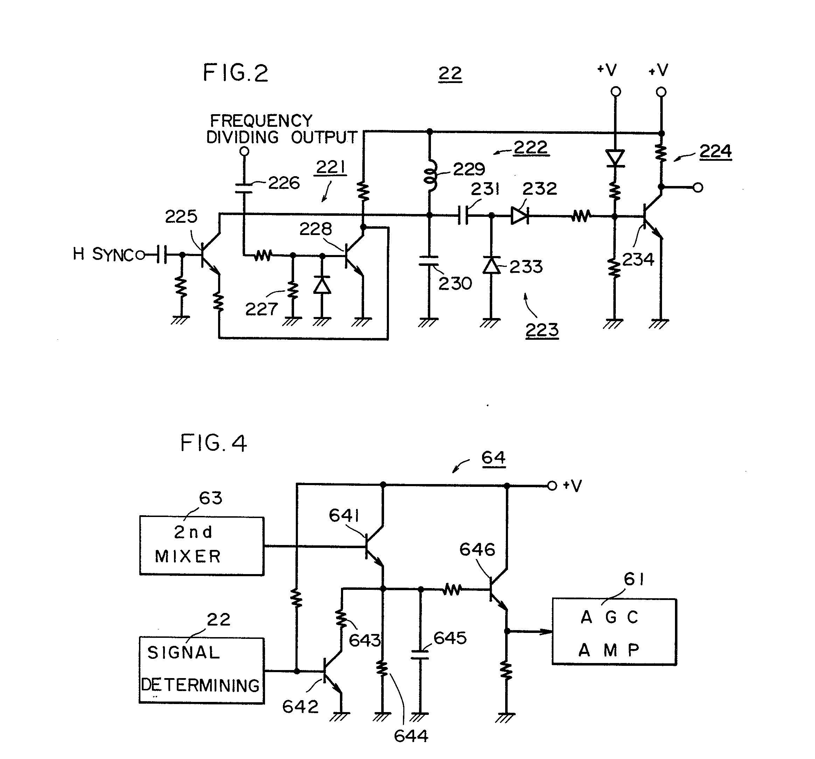

Fig. 1 is a block diagram of one embodiment of the present invention and Fig. 2 is a schematic diagram of a signal determining circuit 22 shown in Fig. 1.

First referring to Fig. 1, the structure of the Fig. 1 embodiment will be described. A broadcast television signal is received through an antenna 1 by a tuner 2. The tuner 1 serves to convert the broadcast television signal, as received, to a television signal of an intermediate frequency of 38.9 MHz, which is applied to a video intermediate frequency amplifier 3. The video intermediate frequency amplifier 3 amplifies the output signal obtained from the tuner 1, whereupon the same is divided into an audio signal and a video signal. The separated audio signal is applied to an audio detecting circuit 19 and is detected thereby. The

- 7 -

detected output signal is applied through an audio signal interrupting circuit 20 to an audio head 23 and a high frequency converter 9. The audio interrupting circuit 20 comprises contacts 201 and 202 which are operable in a coordinated manner. These contacts 201 and 202 may be implemented by switching circuits of such as transistors, for example. The contacts 201 and 202 are adapted such that when a signal of the ordinary television broadcasting is received by the tuner 2 the contact 201 is closed and the contact 202 is opened and, conversely, when a signal other than that of the ordinary television broadcasting is received by the tuner 2 the contact 201 is opened and the contact 202 is closed in response to the representing signal obtained from a signal determining circuit 22 to be described subsequently. The above described audio head 23 is provided to record an audio signal in a magnetic tape and the high frequency converter 9 is provided for the purpose of converting the audio signal into a high frequency signal so that the same may be supplied to a monitor television receiver 24.

On the other hand, the separated video signal is applied to a video detector 4. The video detector 4 detects the video signal to provide the output signal to a luminance/chrominance separating circuit 5. The luminance/chrominance separating circuit 5 serves to separate a luminance signal and a chrominance signal contained in the video signal.

- 8 -

The separated chrominance signal is applied to an automatic color control circuit 10, where the amplitude of the chrominance signal is made constant, and the output therefrom is applied to a first frequency converting circuit 11. On the other hand, the separated luminance signal is applied to an automatic gain control circuit 6. The automatic gain control circuit 6 comprises an automatic gain control amplifier 61, a clamp circuit 62, a second mixer 63, a peak detector 64, a synchronizing separating circuit 65 and a delay circuit 66. The automatic gain control circuit 6 serves to make constant the level of the synchronizing signal component contained in the luminance signal. More specifically, the above described luminance signal is first applied to the automatic gain control amplifier 61 and is amplified thereby, whereupon the amplified luminance signal is applied to the clamp circuit 62. The clamp circuit 62 serves to clamp a sync tip of the synchronizing signal included in the luminance signal, whereby the same is fixed to a given direct current potential. The output signal from the clamp circuit 62 is applied to an FM modulator 14, where the signal is frequency modulated to provide an FM luminance signal. The FM luminance signal is applied to a first mixing circuit 13.

The output signal from the above described automatic gain control amplifier 61 is applied to the synchronizing separating circuit 65 and the high frequency converter 9.

through a video signal interrupting circuit 8. The video signal interrupting circuit 8 comprises contacts 81 and 82 which are operable in a coordinated manner. The video signal interrupting circuit 8 is structured and operates in the same manner as the audio signal interrupting circuit 20. The synchronizing separating circuit 65 extracts the horizontal synchronizing signal included in the luminance signal and provides the extracted signal to the delay circuit 66. The delay circuit 66 provides the horizontal synchronizing signal to the second mixer 63 with a delay of a predetermined time period. The second mixer 63 serves to superimpose the above described delayed horizontal synchronizing signal on the back porch of the horizontal synchronizing signal included in the luminance signal as clamped. The output signal from the second mixer 63 is applied to a peak detector 64. The peak detector 64 aims to peak hold the level of the synchronizing separating output superimposed on the luminance signal, inasmuch as the same changes depending on the amplitude of the horizontal synchronizing signal. The peak detector 64 provides the output signal as peak held to the automatic gain control amplifier 61, so that the gain of the automatic gain control amplifier 61 is controlled. Accordingly, the luminance signal applied to the above described FM modulating circuit 14 has a constant level of the horizontal synchronizing signal.

The output signal from the above described synchronizing separating circuit 65 is also applied to an automatic frequency control circuit 21 constituting a phase-locked loop. The automatic frequency control circuit 21 comprises a voltage controlled oscillator 211, a phase comparing circuit 212 and a frequency dividing circuit 213. The voltage controlled oscillator 211 aims to provide a signal of the frequency of 8 (44 $\pm$ 1/8) $f_H$. The oscillation output signal obtained from the voltage controlled oscillator 211 is applied to the frequency dividing circuit 213. The frequency dividing circuit 213 serves to frequency divide the output signal from the voltage controlled oscillator 211 at the ratio of 1/ 8 (44 $\pm$ 1/8) . Accordingly, the output signal from the frequency dividing circuit 213 becomes a signal of the frequency approximately equal to the frequency $f_H$ of the horizontal synchronizing signal. The frequency divided output signal from the frequency dividing circuit 213 is applied to the phase comparing circuit 212. The phase comparing circuit 212 is also connected to receive the horizontal synchronizing signal from the synchronizing separating circuit 65. Accordingly, the phase comparing circuit 212 compares the phases of the horizontal synchronizing signal and of the frequency divided output signal from the frequency dividing circuit 213, whereby the oscillation frequency of the voltage controlled oscillator 211 is controlled in response to the

- 11 -

comparison output therefrom. Accordingly, the voltage controlled oscillator 211 provides a signal of 8 $(44 \pm 1/8)$ $f_H$ with the phase locked to that of the horizontal synchronizing signal. Meanwhile, $\pm$ of "8 $(44 \pm 1/8)$ $f_H$" indicates that the sign is reversed for each field.

The output signal from the above described automatic frequency control circuit 21 is applied to the 1/8 frequency dividing circuit 7, where the signal is frequency divided. Accordingly, the output signal from the frequency dividing circuit 7 becomes a signal of the frequency of $(44 \pm 1/8)$ $f_H$. The output signal from the frequency dividing circuit 7 is applied to the second frequency converting circuit 15. The fixed oscillator 16 generates a signal of 4.43 MHz of the frequency which is equal to that of the input chrominance signal, which is applied to the above described second frequency converting circuit 15. Accordingly, the second frequency converting circuit 15 provides a signal of the frequency (4.43 MHz + $(44 \pm 1/8)$ $f_H$ which is the sum of the signal of the frequency of 4.43 MHz from the fixed oscillator 16 and the signal of the frequency of $(44 \pm 1/8)$ $f_H$ obtained from the frequency dividing circuit 7. The output signal is applied to the first frequency converting circuit 11. The first frequency converting circuit 11 is also provided with the chrominance signal obtained from the automatic color control amplifier 10. Accordingly, the first frequency

- 12 -

converting circuit 11 serves to convert the frequency of the chrominance signal to the frequency of $(44 \pm 1/8)$ $f_H$.

The above described frequency converted chrominance signal is applied to a low-pass filter so that a high frequency component may be removed therefrom, and the output signal is superimposed on the above described FM luminance signal by means of the first mixing circuit 13, whereupon the output is applied through a video signal interrupting circuit 17 to the video head 18.

Now the signal determining circuit 22 constituting a synchronous detecting circuit will be described. The signal determining circuit 22 aims to determine whether a signal received by the tuner 2 is a signal of the ordinary television broadcasting or not, by comparing the phase of the horizontal synchronizing signal obtained from the synchronizing separating circuit 65 and the phase of the output signal obtained from the frequency dividing circuit 213 of the automatic frequency control circuit 21. The signal determining circuit 22 comprises a gate circuit 221, a resonance circuit 222, a detecting circuit 223 and a switching circuit 224. The gate circuit 221 is supplied with the horizontal synchronizing signal and the frequency divided output signal from the frequency dividing circuit 213. The resonance circuit 222 is structured to make resonance at the frequency $f_H$ of the horizontal synchronizing signal. The detecting circuit 223 aims to detect the output signal from the resonance circuit 222. The switching circuit 224 makes a switching operation in response to the detected output signal obtained from the detecting circuit 223.

Now referring to Fig. 2, a specific structure of the signal determining circuit 22 will be described. The gate circuit 221 comprises transistors 225 and 228, and a capacitor 226 and a resistor 227 constituting a differentiating circuit. The base of the transistor 225 is supplied with the horizontal synchronizing signal obtained from the synchronizing separating circuit 65. The differentiating circuit is supplied with the frequency divided output signal obtained from the frequency dividing circuit 213 included in the automatic frequency control circuit 21. Accordingly, the leading edge of the frequency divided output signal is differentiated by the differentiating circuit and the output is applied to the base of the transistor 228. The emitter of the transistor 225 is connected to the collector of the transistor 228. Accordingly, the transistor 225 is placed in a conductive state only during a period when the transistor 228 is rendered conductive. The collector of the transistor 225 is connected to the resonance circuit 222 including a coil 229 and a capacitor 230. Accordingly, the resonance circuit 222 makes resonance at the frequency $f_H$ during a time period when the transistors 225 and 228 are rendered conductive. The output signal from the resonance circuit 222 is detected by a detecting circuit 223 implemented by capacitors 231 and diodes 232 and 233. The detected signal is applied to the base of the transistor 234 constituting a switching circuit 224. An output obtained from the collector of the transistor 234 is applied to the audio signal interrupting circuit 20, and the video signal interrupting circuits 8 and 17 shown in Fig. 1.

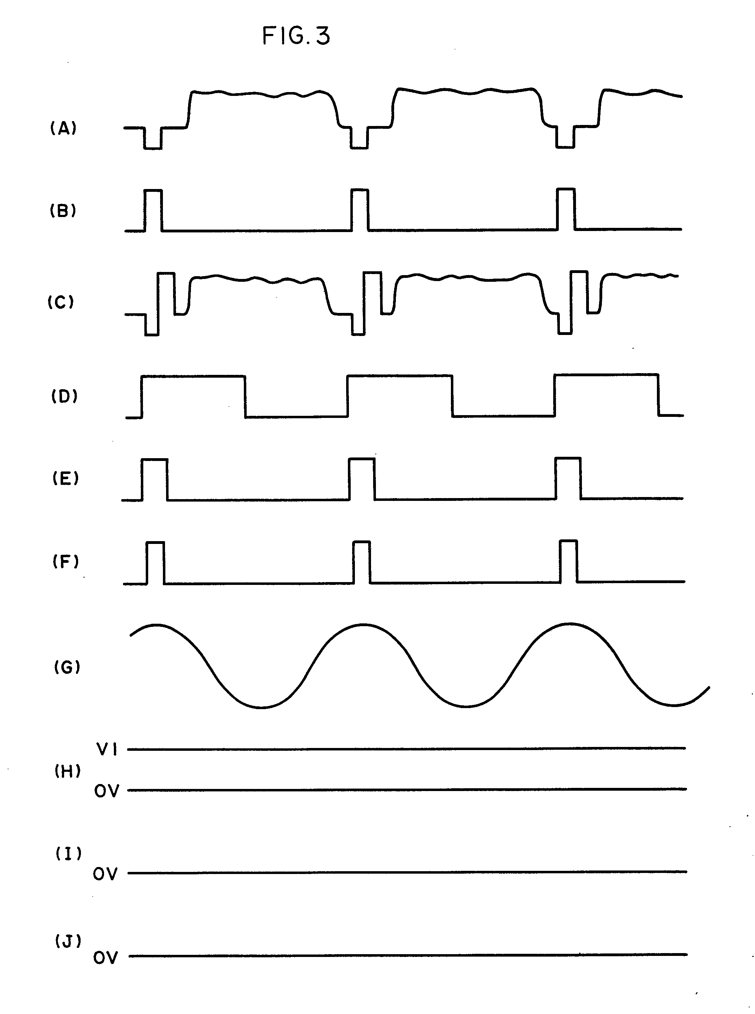

Fig. 3 is a graph showing waveforms of electrical signals for depicting an operation of the diagrams shown in Figs. 1 and 2. With simultaneous reference to Figs. 1 to 3, an operation of the embodiment. shown of the present invention will be specifically described. First in the case where the tuner 2 has been receiving a signal of the ordinary television broadcasting, the synchronizing separating circuit 65 extracts a horizontal synchronizing signal as shown as (B) in Fig. 3 from the luminance signal as shown as (A) in Fig. 3. The horizontal synchronizing signal is applied to the base of the transistor shown in Fig. 2. On the other hand, the frequency dividing circuit 213 included in the automatic frequency control circuit 21 provides a frequency divided output signal of the frequency $f_H$ as shown as (D) in Fig. 3. The frequency divided output signal is differentiated at the leading edge thereof by the differentiating circuit comprising the capacitor 226 and the resistor 227. The differentiated signal becomes a signal of a pulse width slightly larger than that of

- 15 -

the horizontal synchronizing signal, as shown as (E) in Fig. 3. The differentiated signal turns the transistor 228 on. When the transistor 228 is rendered conductive, the transistor 225 is accordingly rendered conductive in response to the horizontal synchronizing signal. More specifically, both the transistors 225 and 228 are rendered conductive only during a time period when the phases of the horizontal synchronizing signal and the frequency divided output signal coincide with each other. The resonance circuit 222 is responsive to conduction of the transistor 225 to provide a resonant sine wave at the frequency $f_H$ as shown as (G) in Fig. 3. The detecting circuit 223 detects the resonant signal to provide the detected output signal having a constant direct current level V1 as shown as (H) in Fig. 3 to the base of the transistor 234. Accordingly, the transistor 234 is rendered conductive and the collector of the transistor becomes the low level. More specifically, the phase determining circuit 22 provides a representing signal of the low level when the tuner is receiving a signal of the ordinary television broadcasting.

When the representing signal becomes the low level, the contact 201 of the audio signal interrupting circuit 20 is closed and the contact 202 of the same is opened. At the same time the contact 81 of the video signal interrupting circuit 8 is closed and the contact 82 of the same is opened. The video signal interrupting circuit 17 is also closed. As a result,

- 16 -

the audio head 23 is supplied with an audio signal detected by the audio detecting circuit 19 and the video head 18 is also supplied with the video signal FM modulated. Accordingly, the video signal and the audio signal can be recorded in a magnetic tape by means of the video head 18 and the audio head 23. Since the high frequency converter 9 is also supplied with the video signal and the audio signal, the ordinary television braodcasting can be monitored by means of the monitor television receiver 24.

Now a description will be made of a case where no signal of the ordinary television broadcasting has been received by the tuner 2. In such a case, no normal horizontal synchronizing signal is obtained from the sychronizing separating circuit 65 or the waveform of the same becomes in disorder and therefore the transistor 225 is not rendered conductive. Therefore, the resonance circuit 222 is not caused resonance and the output signal from the detecting circuit 223 becomes the low level as shown as (I) in Fig. 3. Therefore, the transistor 234 is not rendered conductive and the collector output thereof and hence a representing signal becomes the high level. When the representing signal becomes the high level, the contact 201 of the audio signal interrupting circuit 20 is opened and the contact 202 of the same is closed. At the same time the contact of the video signal interrupting circuit 17 is opened and the contact 81 of the video signal interrupting circuit for a monitoring circuit is opened and the contact 82 of the same is closed. As a result, the audio head 23 and the video head 18 are not supplied with the audio signal and the video signal anymore and no signal is recorded in a magnetic tape. Since neither the audio signal nor the video signal is supplied to the high frequency converter 9, neither picture nor sound can be monitored by the monitor television receiver 24.

According to the embodiment of the present invention, the time constant of the peak detecting circuit 64 can also be changed as a function of the output signal from the signal determining circuit 22.

Fig. 4 is a schematic diagram of a peak detecting circuit 64 which enables a change over of the time constant. Now the structure and the operation of the peak detecting circuit 64 will be described. The output signal from the second mixing circuit 63 is applied to the base of the transistor 641. A time constant circuit including resistors 644 and 645 is connected to the emitter of the transistor 641. Accordingly, the transistor 641 is rendered conductive in response to the output signal from the second mixing circuit 63, thereby to peak hold the output signal therefrom by means of the time constant circuit. The emitter of the transistor 641 is connected to the base of the transistor 646. The emitter of the transistor 646 is connected to the automatic gain control amplifier 61. Therefore, the transistor 646 controls the gain of the automatic gain control amplifier 61 as a function of the voltage peak held by the time constant circuit.

A series connection of a resistor 643 and a transistor 642 is connected in parallel with the above described time constant circuit. The representing signal obtained from the signal determining circuit 22 is applied to the base of the transistor 642. Accordingly, when the output signal obtained from the signal determining circuit 22 is the low level, i.e. when a signal of the ordinary television broadcasting has been received by the tuner 2, the transistor 642 is rendered non-conductive. As a result, since the resistor 643 is not connected in parallel with the time constant circuit, the time constant circuit is now implemented only by the capacitor 645 and the resistor 644, having a relatively long time constant, so that an instantaneous peak value included in the luminance signal can also be held.

On the other hand, when the tuner 2 receives a signal other than that of the ordinary television broadcasting, the output signal from the synchronizing separating circuit 65 becomes of an abnormal waveform. Therefore, when the time constant of the above described time constant circuit is long, the peak detecting circuit 64 does not return to a normal state a little while even after the signal received by the tuner 2 becomes a signal of the ordinary television

- 19 -

broadcasting. However, since the output signal from the signal determining circuit 22 has become the high level at that time, the transistor 642 is rendered conductive. As a result, the resistor 643 comes to be connected in parallel with the time constant circuit. Therefore, the time constant of the time constant circuit becomes shorter than that during a time period when a signal of the ordinary television broadcasting has been received, whereby an operation of the peak detecting circuit 64 becomes more quick.

Meanwhile, in the above described embodiment the horizontal synchronizing signal was utilized as one input to the signal determining circuit 22. However, alternatively the vertical synchronizing signal may be employed within the scope of the present invention. Generally, a video tape recorder comprises a phase-locked loop locked with a vertical synchronizing signal for the purpose of controlling a head motor and a capstan motor. Therefore, it is possible to determine whether a signal received by the tuner 2 is a signal of the ordinary television broadcasting or not by comparing the phase of the output from the frequency dividing circuit included in the above described phase-locked loop and the phase of the vertical synchronizing signal. It is pointed out that such modification also falls within the scope of the present invention.

- 20 -

Although the present invention has been described and illustrated in detail, it is clearly understood that the same is by way of illustration and example only and is not to be taken by way of limitation, the spirit and scope of the present invention being limited only by the terms of the appended claims.

WHAT IS CLAIMED IS:

1.  A television signal recording apparatus for recording a television signal in recording medium, comprising:

tuner means for receiving a television broadcast signal for providing a television signal including a video signal, a synchronizing signal and an audio signal,

synchronizing signal extracting means responsive to said tuner means for extracting a synchronizing signal included in said television signal,

signal generating means responsive to said synchronizing signal extracting means for generating a signal in synchronism with said synchronizing signal and having a frequency approximately equal to that of said synchronizing signal,

phase determining means for comparing the phase of said synchronizing signal obtained from said synchronizing signal extracting means and the phase of said signal obtained from said signal generating means for providing a representing signal for representing that the signal received by said tuner is not a signal of ordinary television broadcasting when the phase of said synchronizing signal is not consistent with the phase of said signal obtained from said signal generating means,

television signal providing means for providing a television signal from said tuner means,

recording means for recording in said recording medium said television signal obtained from said television signal providing means, and

signal interrupting means responsive to said representing signal obtained from said phase determining means for interrupting a signal other than that of the ordinary television broadcasting being applied to said recording means from said television signal providing means.

2. A television signal recording apparatus in accordance with claim 1, which further comprises

video signal extracting means for extracting a video signal from said television signal, and wherein

said recording means comprises video signal recording means for recording in said recording medium said video signal obtained from said video signal extracting means, and

said signal interrupting means comprises means for interrupting said video signal being applied to said video signal recording means.

3. A television signal recording apparatus in accordance with claim 1, which further comprises

audio signal extracting means for extracting an audio signal from said television signal, and wherein

said recording means comprises audio signal recording means for recording in said recording medium said audio signal obtained from said audio signal extracting means, and

said signal interrupting means comprises means for interrupting said audio signal being applied to said audio signal recording means.

4. A television signal recording apparatus in accordance with claim 1, which further comprises

a monitor television receiver, and wherein

said signal interrupting means comprises means responsive to said representing signal obtained from said phase determining means for interrupting said signal being applied from said television signal providing means to said monitor television receiver.

5. A television signal recording apparatus in accordance with claim 4, which further comprises

video signal extracting means for extracting a video signal from said television signal, and wherein

said signal interrupting means comprises means for interrupting said video signal applied from said video signal extracting means to said monitor television receiver.

6. A television signal recording apparatus in accordance with claim 4, which further comprises

audio signal extracting means for extracting an audio signal from said television signal, and wherein

said signal interrupting means comprises means for interrupting said audio signal applied from said audio signal extracting means to said monitor television receiver.

7. A television signal recording apparatus in accordance with claim 1, which further comprises

video signal extracting means for extracting a video signal included in said television signal obtained from said tuner means,

automatic gain control means for controlling the level of said video signal obtained from said video signal extracting means,

time constant circuit means for defining a response rate of said automatic gain control means, and

time constant changing means responsive to said representing signal from said phase determining means for changing the time constant of said time constant circuit means.

8. A television signal recording apparatus in accordance with claim 1, wherein

said signal generating means comprises

variable frequency oscillating means,

frequency dividing means for frequency dividing the oscillation signal obtained from said variable frequency oscillating means for providing to said phase determining means a signal of a frequency approximately equal to that of said synchronizing signal, and

phase comparing means for comparing the phase of said synchronizing signal obtained from said synchronizing signal extracting means and the phase of the output signal obtained from said frequency dividing means for controlling the oscillation frequency of said variable frequency oscillating means.

9. A television signal recording apparatus in accordance with claim 8, wherein

said phase determining means comprises synchronous detecting means.

10. A television signal recording apparatus in accordance with claim 9, wherein

said synchronous detecting means comprises

gate means receiving said signal from said frequency dividing means and said synchronizing signal obtained from

(continued)

0066848

— 27 —

said synchronizing signal extracting means for comparing the phases of said signals,

resonance means for making resonance responsive to said signal obtained from said gate means, and

detecting means for detecting said resonant signal obtained from said resonance means for providing said representing means.

11.   A television signal recording apparatus in accordance with claim 10, wherein

said synchronizing signal comprises a horizontal synchronizing signal and a vertical synchronizing signal, and

said synchronizing signal extracting means comprises means for extracting said horizontal synchronizing signal.

FIG. 1

FIG.2

FREQUENCY
DIVIDING OUTPUT

22

+V    +V

222

224

226    221

229

231    232

225

228

H SYNC

227    230

233

234

223

FIG.4

64

+V

63

2nd
MIXER

641

646

61

22

SIGNAL
DETERMINING

643

645

A G C
A M P

642

644

0066848

FIG.3

(A)

(B)

(C)

(D)

(E)

(F)

(G)

(H) VI

OV

(I) OV

(J) OV